# EUROPÄISCHE PATENTANMELDUNG

(11) **EP 0 995 943 A2**
(43) Veröffentlichungstag der Anmeldung: **26.04.2000**
(21) Anmeldenummer: 99120669.9
(22) Anmeldetag: 19.10.1999
(51) Int. Cl.: F17C 5/00

(54) **Gastankstelle mit Druckgasvorratsbehälter und Kompressoreinrichtung**

(30) Priorität: 22.10.1998 DE 19850191
(71) Anmelder: m-tec Gastechnologie GmbH, 82140 Olching (DE)
(72) Erfinder: Wagner, Thomas, 82178 Puchheim (DE)
(74) Vertreter: Schinke, Herbert, Dr. Dr., Patentanwaltskanzlei

(57) **Zusammenfassung**

Die Erfindung betrifft eine Gastankstelle mit einer mit mindestens einem Zapfventil (2) versehenen Gaszapfleitung (L₁), die von einem Druckgasvorratsbehälter (V) ausgeht und mit einem zu betankenden Gasbehälter (T) gasdicht verbindbar ist und in die eine Kompressoreinrichtung (C) eingeschaltet ist, deren Druckseite in Strömungsrichtung des Gases zum zu betankenden Gasbehälter (T) weist. Vorgesehen ist dabei,
- daß die Gaszapfleitung (L₁) durch vor und hinter der Kompressionseinrichtung (C) angeordnete Ventile (1,2) zeitweilig verschließbar ist,
- daß eine mit dem zu betankenden Gasbehälter (T) gasdicht verbindbare Gasrückführleitung (L₂) vorgesehen ist, die in den Druckgasvorratsbehälter (V) zurückführt,
- daß die Gasrückführleitung (L₂) mindestens zwei Absperrventile (3,4) aufweist, zwischen denen die Kompressoreinrichtung (C) in die Gasrückführleitung (L₂) eingeschaltet ist, wobei die Druckseite der Kompressoreinrichtung (C) in Strömungsrichtung des Gases zum Druckgasvorratsbehälter (V) weist, und
- daß eine Bypass-Leitung (L₃) vorgesehen ist, die ein Absperrventil (5) aufweist und über die bei Öffnung der mindestens zwei Absperrventile (3,4) der Gasrückführleitung (L₂) unter Umgehung der Kompressoreinrichtung (C) Gas aus dem Druckgasvorratsbehälter (V) direkt in den zu betankenden Gasbehälter (T) füllbar ist.

## Beschreibung

Die Erfindung betrifft eine Gastankstelle mit einer mit mindestens einem Zapfventil versehenden Gaszapfleitung, die von einem Druckgasvorratsbehälter ausgeht und mit einem zu betankenden Gasbehälter gasdicht verbindbar ist. In die Gaszapfleitung ist eine Kompressoreinrichtung eingeschaltet, wobei die Druckseite der Kompressoreinrichtung in Strömungsrichtung des Gases zum betankenden Gasbehälter weist.

Eine solche Gastankstelle, die aus der DE 196 50 999 C1 bekannt ist, hat den Vorteil, daß der Druckgasvorratsbehälter nur auf einem geringeren Druckniveau gehalten werden muß, als dies bei einem herkömmlichen Gastankstellensystem mit mehreren auf unterschiedlich hohem Druckniveau befindlichen Druckgasvorratsbehältern der Fall ist, die nacheinander zur Befüllung des zu betankenden Gasbehälters angezapft werden.

Generell besteht bei der Befüllung von Druckgasbehältern, sei es Erdgas, Wasserstoff oder ein anderes Gas, das Problem, daß sich die Gasfüllung im zu betankenden Gasbehälter während des Füllvorgangs stark erwärmt. Diese Vorgänge sind in der nicht vorveröffentlichten deutschen Patentanmeldung DE 197 30 459.1 der Anmelderin eingehend beschrieben. Auf den Inhalt dieser Patentanmeldung wird hiermit verwiesen und deren Offenbarungsgehalt in die vorliegende Anmeldung einbezogen. Durch die Erwärmung der eingefüllten Gasmenge stellt sich bei Einhaltung eines bestimmten maximalen Fülldrucks während des Betankungsvorgangs nachträglich, wenn der Gasbehälter mit seiner Füllung auf Umgebungstemperatur abgekühlt ist, ein geringeres Druckniveau ein. Das bedeutet, daß der Gasbehälter nicht die eigentlich gewünschte Füllmenge aufgenommen hat. Diese Minderfüllung liegt etwa in einer Größenordnung von 10% bis 20%. Sie läßt sich dadurch vermeiden, daß man beispielsweise bei der Befüllung einen deutlich höheren Fülldruck wählt, so daß nach Abkühlung der Gasfüllung der eigentlich gewünschte Fülldruck gewährleistet ist. Dies ist nachteilig, weil nicht nur der Gasbehälter auf einen entsprechend hohen Überhöhungsdruck ausgelegt sein muß, sondern weil auch das einzufüllende Druckgas auf ein entsprechend hohes Druckniveau angehoben werden muß. Eine andere Möglichkeit besteht darin, den Betankungsvorgang in mehreren Teilschritten vorzunehmen, zwischen denen eine Abkühlung der Gasfüllung stattfinden muß. Dies verlängert die Betankungszeiten drastisch (z.B. mehrere Stunden) so daß dies für viele praktische Anwendungen nicht in Frage kommen kann.

Durch das in der DE 197 30 459.1 beschriebene Betankungsverfahren werden diese Nachteile beseitigt.

Aufgabe der vorliegenden Erfindung ist es, eine Gastankstelle der eingangs genannten Art dahingehend weiterzubilden, daß diese sowohl zur Betankung von Gasbehältern herkömmlicher Art als auch zur Schnellbetankung von Gasbehältern bei möglichst vollständiger Füllung ohne Erzeugung eines deutlichen Überhöhungsdrucks anwendbar ist. Der hierfür zu treibende bauliche Aufwand soll möglichst gering sein.

Gelöst wird diese Aufgabe erfindungsgemäß mit den im Patentanspruch 1 angegebenen Merkmalen, wobei vorteilhafte Weiterbildungen in den Unteransprüchen angegeben sind.

Die erfindungsgemäße Gastankstelle ermöglicht zum einen eine herkömmliche Befüllung von Gasbehältern, wie dies aus der DE 196 50 999 C1 bekannt ist. Dabei wird nach Öffnen eines Ventils Druckgas aus einem Druckgasvorratsbehälter über eine Kompressoreinrichtung, die in die Gaszapfleitung eingeschaltet ist, in den Gasbehälter eingefüllt. Wie bei der in der DE 197 30 459.1 beschriebenen Gastankstelle besitzt auch die erfindungsgemäße Gastankstelle eine Gasrückführleitung. Letztere ist wahlweise durch Betätigung eines Ventils einschaltbar, so daß ein mit zwei entsprechenden Leitungsanschlüssen versehener Gasbehälter nach der in der DE 197 30 459.1 beschriebenen Weise betankt werden kann. Die Betankung läuft in der Form ab, daß aus einem im Vergleich zum Volumen des zu betankenden Gasbehälter sehr groß-volumigen Druckgasvorratsbehälter Druckgas über die Gaszapfleitung und die Kompressoreinrichtung, die vorzugsweise lediglich im Sinne einer Pumpe arbeitet, also keine wesentliche Kompressionsarbeit leistet, in den Gasbehälter eingefüllt wird, bis ein Druckausgleich eingetreten ist, also im Gasbehälter etwa derselbe Druck wie im Druckgasvorratsbehälter herrscht. Sobald dieser Zustand erreicht ist, wird das Rohrleitungssystem der erfindungsgemäßen Gastankstelle mittels entsprechender Absperrventile derart umgeschaltet, daß die Kompressoreinrichtung von Füllbetrieb auf Umpumpbetrieb umgeschaltet wird. Hierzu wird die Kompressoreinrichtung aus der Gaszapfleitung ausgeschaltet, indem vor und hinter der Kompressoreinrichtung jeweils ein entsprechendes Ventil geschlossen wird, und stattdessen in die Gasrückführleitung eingeschaltet, indem in der Gasrückführleitung entsprechende Absperrventile geöffnet werden, die in Strömungsrichtung vor und hinter der Kompressoreinrichtung angeordnet sind. Die Gasrückführleitung ist in der Weise angerichtet, daß sie in einem ersten Teilstück von dem Druckgasvorratsbehälter ausgeht und zur Druckseite der Kompressoreinrichtung führt, also sich dort mit der Gaszapfleitung verbindet. In entsprechender Weise ist ein zweites Teilstück der Gasrückführleitung ausgehend von der Saugseite der Kompressoreinrichtung, also von dem dort angeordneten Teil der Gaszapfleitung bis zum zu betankenden Gasbehälter zurückgeführt. Die Gaszapfleitung und die Gasrückführleitung sind jeweils über eigene Leitungsanschlüsse mit dem Gasbehälter verbunden. Damit ein Umpumpbetrieb stattfinden kann, muß der durch die Ventile in der Gaszapfleitung abgesperrte Teil der Gaszapfleitung mittels einer entsprechenden Bypass-Leitung, die durch ein eigenes Ventil geöffnet und geschlossen werden kann, überbrückt werden. Wenn das gewährleistet ist, kann mittels der in die Gasrückführleitung eingeschalteten Kompressoreinrichtung erwärmtes Druckgas aus dem Gasbehälter abgesaugt und in den Druckgasvorratsbehälter zurückgeführt werden. Gleichzeitig wird über die Gaszapfleitung bzw. die eingeschaltete Bypass-Leitung ein gleich großes Volumen an Gas, das sich auf dem vorgeschriebenen Temperaturniveau befindet, in den Gasbehälter eingeführt, so daß nach Austausch der gesamten heißen Gasfüllung im Gasbehälter eine ordnungsgemäß temperierte und auf dem gewünschten Druckniveau befindliche Gasfüllung vorliegt. Dadurch wird eine vollständige Befüllung des Gasbehälters sichergestellt.

Die vorliegende Erfindung sieht vor, die Kompressoreinrichtung, die für den Umpumpbetrieb an sich auch in der Gaszapfleitung verbleiben könnte und dann aber bezüglich des Gasbehälters im Druck- statt Saugbetrieb arbeiten müßte, in die Gasrückführleitung einzuschalten, da sich dies im praktischen Betrieb als wesentlich vorteilhafter herausgestellt hat, weil der gewünschte Temperaturausgleich im zu befüllenden Gasbehälter gegenüber der Temperatur des Druckgases im Druckgasvorratsbehälter hierdurch deutlich schneller erzielt werden kann, so daß sich der Betankungsvorgang insgesamt verkürzt. Gleichzeitig gewährleistet das erfindungsgemäße Konzept einer Gastankstelle, daß diese auch in herkömmlicherweise zur Befüllung von Gasbehältern mit nur einem Leitungsanschluß im sogenannten Booster-Betrieb einsetzbar bleibt.

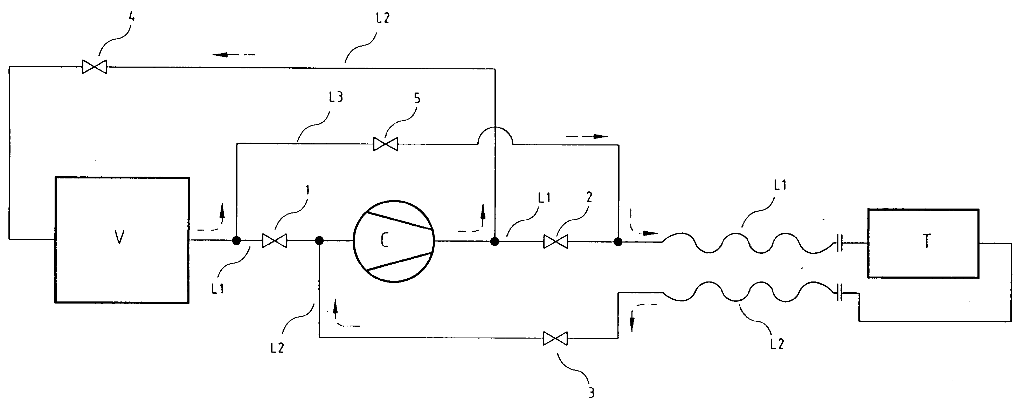

Nachfolgend wird die Erfindung anhand des in der einzigen Figur schematisch dargestellten Ausführungsbeispiels einer Gastankstelle mit ihren vorteilhaften Weiterbildungen näher beschrieben.

Die erfindungsgemäße Gastankstelle weist einen Druckgasvorratsbehälter V und eine Kompressoreinrichtung C auf. Der zu befüllende Gasbehälter T weist auf zwei einander gegenüberliegenden Seiten jeweils einen Anschluß für eine Gaszapfleitung L₁ und eine Gasrückführleitung L₂ der Gastankstelle auf Zweckmäßigerweise ist das letzte Teilstück dieser beiden Leitungen L₁ und L₂ jeweils als flexibler Druckschlauch ausgebildet, was in der Figur durch eine geschlängelte Darstellung zum Ausdruck gebracht wird. Sowohl die Gaszapfleitung L₁ als auch die Gasrückführleitung L₂ sind aus mehreren Teilstücken zusammengesetzt, die entsprechend bezeichnet sind. Die Kompressoreinrichtung C ist in die Gaszapfleitung L₁ derart eingeschaltet, daß ihre Druckseite in Strömungsrichtung des Druckgases zum zu befüllenden Gasbehälter T weist. Vor und hinter der Kompressoreinrichtung C ist jeweils ein Ventil 1 bzw. 2 in die Gaszapfleitung L₁ eingeschaltet. Die Gasrückführleitung L₂ geht vom Druckgasvorratsbehälter V in einem ersten Teilstück aus, das zwischen dem Ventil 2 und der Kompressoreinrichtung C in die Gaszapfleitung L₁ mündet, so daß dieses Teilstück mit der Druckseite der Kompressoreinrichtung C verbunden ist. Durch ein Absperrventil 4 kann dieses Teilstück der Gasrückführleitung L₂ abgesperrt werden. Ein zweites Teilstück der Gasrückführleitung L₂ zweigt zwischen dem Ventil 1 und der Saugseite der Kompressoreinrichtung C von dem entsprechenden Teilstück der Gaszapfleitung L₁ ab und führt über ein Absperrventil 3 bis zum entsprechenden Leitungsanschluß am Gasbehälter T. Darüber hinaus ist eine Bypass-Leitung L₃ vorhanden, die zwischen dem Druckgasvorratsbehälter V und dem Ventil 1 von der Gaszapfleitung L₁ abzweigt und über ein Absperrventil 5 wieder zur Gaszapfleitung L₁ zurückführt, wobei die Mündungsstelle zwischen dem Ventil 2 und dem Leitungsanschluß der Gaszapfleitung L₁ am Gasbehälter T liegt. Zweckmäßigerweise werden die Verbindungen der Gaszapfleitung L₁ und der Gasrückführleitung L₂ mit dem Druckgasvorratsbehälter V so angeordnet, daß sie sich an möglichst weit voneinander entfernten Enden des Druckgasvorratsbehälters V befinden. Die Bypass-Leitung L könnte auch unmittelbar vom Druckgasvorratsbehälter V ausgehen und bis zur Anschlußstelle der Gaszapfleitung L₁ am Gasbehälter T als separate Leitung geführt sein. Zur Minimierung des Rohrleitungsaufwandes empfiehlt es sich jedoch, entsprechend der Darstellung in der Figur die Bypass-Leitung L₃ möglichst kurz zu machen, so daß diese nur gerade die Umgehung der Kompressoreinrichtung T ermöglicht.

Die Funktion der erfindungsgemäßen Gastankstelle ist folgende:

Es gibt mehrere Möglichkeiten zur Durchführung der ersten Betankungsphase, die mit einem Füllzustand endet, bei dem im Gasbehälter T eine heiße Gasfüllung vorliegt, die auf dem gleichen Druckniveau befindlich ist wie das Druckgas in dem wesentlich größeren Druckgasvorratsbehälter V, dessen Druckniveau sich wegen dieser Volumenverhältnisse praktisch nicht verändert. Die erste Möglichkeit besteht darin, daß lediglich die Ventile 1 und 2 geöffnet sind, während die Ventile 3, 4 und 5 geschlossen sind. In diesem Fall strömt das Druckgas aus dem Druckgasvorratsbehälter V über die Kompressoreinrichtung durch die Gaszapfleitung L₁ in den Gasbehälter T ein. Bei einer anderen Variante kann das Druckgas auch durch einfaches Überströmen ohne jegliche Funktion der Kompressoreinrichtung C bei geschlossenen Ventilen 1, 2, 3, 4 und lediglich bei geöffnetem Ventil 5 in den Gasbehälter T gelangen. Eine weitere Möglichkeit ist in der freien Überströmung des Druckgases bei geschlossenen Ventilen 2, 4 und 5 sowie geöffneten Ventilen 1 und 3 zu sehen. In diesem Fall würde das Druckgas wiederum ohne Betätigung der Kompressoreinrichtung C durch einfaches Überströmen durch das erste Teilstück der Gaszapfleitung L₁ und das zweite Teilstück der Gasrückführleitung L₂ in den Gasbehälter T gelangen. Selbstverständlich könnten diese einzelnen Varianten auch in beliebiger Weise miteinander kombiniert werden, so daß auch gleichzeitig durch die Gaszapfleitung L₁ und die Gasrückführleitung L₂ Druckgas aus dem Druckgasvorratsbehälter V in den Gasbehälter T einströmen kann, wobei wahlweise mit oder ohne Kompressoreinrichtung gearbeitet werden kann. Dies kann für eine möglichst schnelle Durchführung der ersten Betankungsphase sinnvoll sein. Wenn in dieser Weise eine parallele Nutzung einzelner Leitungsabschnitte vorgenommen wird, sollten die Strömungsquerschnitte der einzelnen Leitungsabschnitte so gewählt sein, daß diese Parallelschaltung auch tatsächlich einen Vorteil bringt. Das bedeutet etwa, daß im Falle einer Befüllung des Gasbehälters T gleichzeitig durch die Gaszapfleitung L₁ und die Gasrückführleitung L₂ bei geöffneten Ventilen 1, 2 und 3 und geschlossenen Ventilen 4, 5 das erste Teilstück der Gaszapfleitung L₁ einen deutlich größeren Durchmesser haben sollte als die Durchmesser des zweiten Teilstück der Gaszapfleitung L₁ und des einen Teilstücks der Gasrückführleitung L₂. Sobald der Druckausgleich zwischen dem Gasbehälter T und dem Druckgasvorratsbehälter V eingetreten ist, ist die erste Betankungsphase beendet. Erfindungsgemäß ist die Gastankstelle mit einer Meßeinrichtung versehen, die die während dieser ersten Betankungsphase in den Gasbehälter T überströmende Gasmenge mißt. Für die zweite Betankungsphase (Umpumpbetrieb) werden die Ventile 1 und 2 geschlossen und die Ventile 3 , 4 und 5 geöffnet. Dadurch wird die Kompressoreinrichtung C aus der Gaszapfleitung L₁ ausgekoppelt und zwischen die beiden Teilstücke der Gasrückführleitung L₂ eingeschaltet. Die Strömung des Druckgases während des Umpumpbetriebs ist in der Figur durch gestrichelt ausgeführte Pfeile angedeutet. Die Betätigung der Kompressoreinrichtung C bewirkt, daß über die Gasrückführleitung L2 heißes Druckgas aus dem Gasbehälter T abgesaugt und in den Druckgasvorratsbehälter V zurückgespeist wird. Gleichzeitig wird ein gleich großes Volumen kalten Druckgases aus dem Druckgasvorratsbehälter V über die Bypass-Leitung L3 und das zweite Teilstück der Gaszapfleitung L₁ in den Gasbehälter T geführt. Im Gasbehälter T findet also ein Austausch von heißem Druckgas gegen kaltes Druckgas statt. Wegen der bestehenden Temperaturdifferenz bei gleichem Druck bedeutet dies, daß eine größere Gasmenge neu in den Gasbehälter T eingeführt wird, als aus diesem abgezogen wird. Dadurch nimmt der mengenmäßige Befüllungsgrad während des Umpumpbetriebs zu, obwohl der Druck auf gleichem Niveau verharrt. Um die dabei zugeführte Gasmenge zu erfassen, stellt die Meßeinrichtung die Differenz zwischen der während des Umpumpbetriebs in den Gasbehälter T eingefüllten und der aus dem Gasbehälter abgezogenen Gasmenge fest, so daß eine einwandfreie Abrechnung der tatsächlich insgesamt eingefüllten Gasmenge gewährleistet ist. Diese Meßeinrichtung arbeitet vorteilhafterweise nach dem Prinzip eines Coriolis-Rohrs.

Der Umpumpbetrieb, also der Austausch von heißem gegen kaltes Druckgas kann beendet werden, sobald die Temperatur im Druckgasvorratsbehälter V und im Gasbehälter T gleich oder nahezu gleich sind. Dieser Zustand wird zweckmäßigerweise so festgestellt, daß in die Gaszapfleitung L₁ und in die Gasrückführleitung L₂ eine Temperaturmeßeinrichtung eingeschaltet wird, die auf die Temperaturdifferenz anspricht. Zweckmäßigerweise wird die Umschaltung der Ventile und gegebenenfalls die Betätigung der Kompressoreinrichtung C mittels einer Steuerung, vorzugsweise einer elektronischen Steuerung vorgenommen. Die Temperaturmeßeinrichtung wird vorteilhaft mit dieser Steuerung signaltechnisch gekoppelt, wobei die Steuerung den Umpumpbetrieb beendet, sobald eine bei null liegende Temperaturdifferenz festgestellt wird. Selbstverständlich ist es auch möglich, auf eine entsprechende automatische Steuerung zu verzichten und den gesamten Betankungsvorgang manuell zu steuern.

Die erfindungsgemäße Gastankstelle ist nicht nur für die Durchführung von sogenannten isothermen Betankungsvorgängen für eine vollständige Tankfüllung geeignet, bei denen innerhalb kürzester Zeit eine Gasfüllung in einen Gasbehälter eingefüllt werden kann, die die gleiche Temperatur und den gleichen Druck aufweist wie die Gasfüllung im Druckgasvorratsbehälter. Vielmehr ist die Gastankstelle auch für herkömmliche Betankungsvorgänge geeignet, die immer dann angewendet werden müssen, wenn der zu betankende Gasbehälter lediglich einen einzigen Leitungsanschluß aufweist über den die Gaszapfleitung L1 gasdicht mit dem Gasbehälter verbindbar ist. Für Gasbehälter mit einem zweiten Leitungsanschluß, der für die gasdichte Verbindung mit einer Gasrückführleitung geeignet ist, kann das isotherme Betankungsverfahren angewendet werden.

## Patentansprüche

1. Gastankstelle mit einer mit mindestens einem Zapfventil (2) versehenen Gaszapfleitung (L₁), die von einem Druckgasvorratsbehälter (V) ausgeht und mit einem zu betankenden Gasbehälter (T) gasdicht verbindbar ist und in die eine Kompressoreinrichtung (C) eingeschaltet ist, deren Druckseite in Strömungsrichtung des Gases zum zu betankenden Gasbehälter (T) weist, dadurch gekennzeichnet,
- daß die Gaszapfleitung (L₁) durch vor und hinter der Kompressionseinrichtung (C) angeordnete Ventile (1,2) zeitweilig verschließbar ist,
- daß eine mit dem zu betankenden Gasbehälter (T) gasdicht verbindbare Gasrückführleitung (L₂) vorgesehen ist, die in den Druckgasvorratsbehälter (V) zurückführt,
- daß die Gasrückführleitung (L₂) mindestens zwei Absperrventile (3,4) aufweist, zwischen denen die Kompressoreinrichtung (C) in die Gasrückführleitung (L₂) eingeschaltet ist, wobei die Druckseite der Kompressoreinrichtung (C) in Strömungsrichtung des Gases zum Druckgasvorratsbehälter (V) weist, und
- daß eine Bypass-Leitung (L₃) vorgesehen ist, die ein Absperrventil (5) aufweist und über die bei Öffnung der mindestens zwei Absperrventile (3,4) der Gasrückführleitung (L₂) unter Umgehung der Kompressoreinrichtung (C) Gas aus dem Druckgasvorratsbehälter (V) direkt in den zu betankenden Gasbehälter (T) füllbar ist.

2. Gastankstelle nach Anspruch 1,
dadurch gekennzeichnet,
daß die Bypass-Leitung (L₃) hinter der Kompressoreinrichtung (C) in die Gaszapfleitung (L₁) mündet.

3. Gastankstelle nach einem der Ansprüche 1 bis 2,
dadurch gekennzeichnet,
daß die Bypass-Leitung (L₃) vor der Kompressoreinrichtung (C) von der Gaszapfleitung (L₁) abzweigt.

4. Gastankstelle nach einem der Ansprüche 1 bis 3,
dadurch gekennzeichnet,
daß die Verbindungen der Gaszapfleitung (L₁) und der Gasrückführleitung (L₂) mit dem Druckgasvorratsbehälter (V) an einander gegenüberliegenden Enden des Druckgasvorratsbehälters (V) angeordnet sind.

5. Gastankstelle nach einem der Ansprüche 1 bis 4,
dadurch gekennzeichnet,
daß eine Steuerung, insbesondere eine elektronische Steuerung vorgesehen ist, die durch Umschaltung der Ventile (1 bis 5) die Kompressoreinrichtung (C) von Füllbetrieb auf Umpumpbetrieb umschaltet, und das eine Meßeinrichtung vorgesehen ist, die während des Füllbetriebs die in den Gasbehälter (T) eingefüllte Gasmenge und während des Umpumpbetriebs die Differenz zwischen der in den Gasbehälter (T) eingefüllten und der aus dem Gasbehälter (T) abgezogenen Gasmenge ermittelt.

6. Gastankstelle nach Anspruch 5,
dadurch gekennzeichnet,
daß die Meßeinrichtung auf dem Prinzip eines Coriolis-Rohrs basiert.

7. Gastankstelle nach einem der Ansprüche 1 bis 6,
dadurch gekennzeichnet
daß eine Temperaturmeßeinrichtung vorgesehen ist, die die Temperaturdifferenz des Gases in der Gaszapfleitung (L₁) und in der Gasrückführleitung (L₂) detektiert.

8. Gastankstelle nach den Ansprüche 5 und 7,
dadurch gekennzeichnet,
daß die Temperaturmeßeinrichtung mit der Steuerung signaltechnisch verbunden ist und die Steuerung bei Detektierung einer bei null liegenden Temperaturdifferenz den Umpumpbetrieb beendet.
